# DEMANDE DE BREVET EUROPEEN

(11) **EP 3 159 099 A1**
(43) Date de publication de la demande: **26.04.2017**
(21) Numéro de dépôt: 16193585.3
(22) Date de dépôt: 12.10.2016
(51) Int. Cl.: B23P 19/00, B65G 47/14

(54) **DISPOSITIF DE DISTRIBUTION DE COMPOSANTS DE TYPE AGRAFE ET INSTALLATION EQUIPEE D'UN TEL DISPOSITIF**

(30) Priorité: 15.10.2015 FR 1559824
(71) Demandeur: Technovatis, 59134 Fournes En Weppes (FR)
(72) Inventeur: DELATTRE, Jean-Yves, 59134 Fournes-en-Weppes (FR)
(74) Mandataire: Cabinet Rifflart Vandenbossche

(57) **Abrégé**

L'invention concerne un dispositif (1) de distribution d'agrafes (2, 2a, 2b) comprenant : un magasin (8) de réception d'un composant (2a) ; une plaque (10) d'extraction du composant hors du magasin ; un rail de guidage (14) muni d'une zone d'entrée (15), d'une zone de sortie (16) et d'une rainure (17), la zone d'entrée réceptionnant le composant logé sur la plaque en position haute, la zone de sortie permettant l'extraction du composant (2b) hors du dispositif, et la rainure guidant le composant de la zone d'entrée vers la zone de sortie ; un système de maintien (19) du composant dans une zone d'attente (21) sur la rainure, qui est activé par la plaque, l'arrêt de la plaque dans une position définie permettant le maintien du composant en zone d'attente ; un système de transfert (22) déplaçant le composant de la zone d'attente vers la zone de sortie, qui est activé par la plaque lors de son redémarrage ; un système de gestion contrôlant la présence de composants (2a, 2b) en zones d'attente et de sortie, stoppant la plaque dans la position définie lors de la présence d'un composant en zone d'attente, et redémarrant la plaque lors d'une absence de composant en zone de sortie.

## Description

### Domaine technique

La présente invention concerne un dispositif de distribution de composants de type agrafe qui comprend une tête, un corps et une gorge circulaire agencée sur la tête ou entre la tête et le corps. De telles agrafes sont destinées à être mis en place par encliquetage sur des pièces qui, ultérieurement, seront agrafées sur des supports. Pour cela, la tête de l'agrafe est configurée pour être encliquetée sur la pièce, et le corps de l'agrafe est configuré pour être encliqueté sur le support, lors de l'agrafage ultérieur de ladite pièce. Par exemple, ces agrafes sont montées sur des pièces en plastique, des ébénisteries ou des planches de bord qui sont ultérieurement assemblées dans des véhicules. L'invention concerne également une installation équipée d'au moins un tel dispositif de distribution de composants alimenté par un dispositif d'alimentation en composants.

L'invention sera mise en oeuvre par les fabricants de dispositifs de distribution et de montage de composants. Elle trouvera son application notamment chez les équipementiers, par exemple dans le domaine automobile, pour l'assemblage de composants sur des pièces d'habitacle de véhicules en vue de leur montage sur des châssis de véhicules.

### Etat de la technique

Il est connu des dispositifs de distribution de composants de type agrafe qui sont décrits dans les demandes internationales de brevet publiées sous les numéros WO2010004211A1, WO2012007669A1. Il est également connu la demande de brevet publiée sous le numéro FR3004978A1 qui décrit une installation équipée d'au moins un dispositif d'alimentation en composants et d'au moins un dispositif de distribution et de montage de composants. Ces dispositifs et cette installation présentent de nombreux avantages par rapport aux dispositifs et installations antérieures connues que sont notamment les bols vibrants et les installations robotisées complexes. Ces conceptions permettent notamment de réduire les coûts de fabrication et, en outre, permettent une implantation directement sur les postes de travail d'une chaîne de montage ou d'une cellule de montage, en optimisant l'encombrement et la sécurité.

Ces dispositifs de distribution en composants comprennent un magasin dans lequel sont stockés en vrac les composants, un système d'extraction configuré pour extraire un composant disposé dans le magasin et le transférer jusqu'à une zone d'entrée d'un système de stockage provisoire, où ledit composant est disposé dans une position définie. Le système de stockage provisoire est configuré pour acheminer les uns à la suite des autres les composants dans leur position définie, jusqu'à une zone de sortie. Les composants dans leur position définie sont ensuite extraits successivement de la zone de sortie et montés sur les pièces qui comprennent une ou plusieurs zones d'enclenchement de composants sur une de leurs faces.

Ces différents dispositifs de distribution décrits dans les documents WO2010004211A1, WO2012007669A1 et FR3004978A1 nécessitent une précision de mise en oeuvre du système de stockage provisoire. En effet, le système de stockage provisoire comprend des rails de guidage dans lesquels les composants, dans leur position définie, sont acheminés successivement de la zone d'entrée jusque la zone de sortie. Cet acheminent s'effectue en poussant le premier composant disposé dans la zone d'entrée, à l'intérieur du rail de guidage, ce qui décale d'un rang les composants dans le rail de guidage et déplace le dernier composant dans la zone de sortie. Ces rails de guidage doivent présentés un dimensionnement précis et éviter des changements d'orientation trop prononcés pour ne pas causer le blocage par chevauchement entre les composants. En outre, les composants doivent également avoir des dimensions précises pour éviter aussi ce problème de chevauchement dans le rail de guidage. Ces inconvénients se rencontrent également, de manière plus importante, avec un bol vibrant qui utilise des rails de guidage de plus grande longueur pour acheminer les composants jusqu'à une zone de sortie, et du fait des vibrations qu'occasionne le bol vibrant.

### Résumé de l'invention

La présente invention a pour objectif de pallier les inconvénients précités. A cet effet, l'invention concerne dispositif de distribution de composants du type agrafe munie d'une gorge circulaire. L'agrafe comprend en outre une tête et un corps, la gorge circulaire étant agencée sur la tête, ou entre la tête et le corps.

Le dispositif de distribution comprend un magasin pour la réception d'au moins un composant. De préférence, le magasin est de petites dimensions, pour permettre la réception d'un, de deux ou de trois composants tout au plus. Cela permet de réduire l'encombrement du magasin.

Le dispositif de distribution comprend une plaque agencée dans le magasin et des moyens de translation en va-et-vient de la plaque. En outre, la plaque est munie d'une arête supérieure inclinée configurée pour se loger dans la gorge circulaire du composant et le faire rouler dans le sens de l'inclinaison. Ainsi, le mouvement en va-et-vient de la plaque permet de saisir de manière aléatoire un composant dont la gorge circulaire vient se loger dans l'arête, ledit composant étant alors emporté vers le haut tout en roulant dans le sens de l'inclinaison.

Le dispositif comprend également un rail de guidage muni d'une zone d'entrée, d'une zone de sortie et d'une rainure. La zone d'entrée est configurée pour réceptionner le composant logé sur l'arête supérieure de la plaque lorsque ladite plaque est en position haute, la gorge cylindrique dudit composant permettant de rouler sur l'extrémité de l'arête inclinée jusqu'à être transféré dans la zone d'entrée du rail de guidage. La zone de sortie est configurée pour permettre l'extraction du composant hors du dispositif et l'encliquetage de sa tête sur une pièce au moyen d'un dispositif de manipulation de type pousseur, percuteur ou autre, cette configuration dépendant notamment de l'agencement du poste de travail sur lequel est installé ledit dispositif, et de la direction d'extraction du composant afin de permettre ledit encliquetage. Par ailleurs, la rainure est configurée pour réceptionner la gorge circulaire et pour guider le composant de la zone d'entrée vers la zone de sortie. Ainsi, le composant est engagé sur le rail et dispose pour seul degré de mobilité, d'un mouvement de translation le long de la rainure.

De manière remarquable, le dispositif de distribution selon l'invention comprend un système de maintien du composant dans une zone d'attente sur la rainure. Le système de maintien est configuré pour être activé par la plaque, lors d'une translation vers le haut et/ou vers le bas de ladite plaque, selon la configuration du système de maintien, l'arrêt de la plaque dans une position définie permettant audit système de maintenir le composant dans la zone d'attente. En outre, le dispositif de distribution comprend un système de transfert configuré pour déplacer le composant de la zone d'attente vers la zone de sortie, le système de transfert étant configuré pour être activé par la plaque lors du redémarrage de ladite plaque. Par ailleurs, le dispositif de distribution comprend un système de gestion configuré pour au moins contrôler la présence d'un composant en zone d'attente et la présence d'un composant en zone de sortie, pour stopper la plaque dans la position définie lors de la détection d'une présence de composant en zone d'attente, et pour redémarrer la plaque lors d'une détection d'une absence de composant en zone de sortie.

Ainsi, le dispositif de distribution selon l'invention extrait un composant du magasin en activant en va-et-vient la plaque. Ce composant extrait est ensuite transféré de l'arête incliné de la plaque jusque dans la zone d'entrée du rail, lorsque la plaque est en position haute. Le système de gestion détecte alors que ce composant atteint ou et sur le point d'atteindre la zone d'attente sur le rail suite à son extraction par la plaque, et stoppe alors la plaque dans une position définie, par exemple en position haute ou en position basse, selon la configuration. L'activation de la plaque permet concomitamment d'actionner le système de maintien qui atteint ou a atteint une position de maintien du composant dans la zone d'attente lorsque la plaque est en position définie. L'arrêt de la plaque dans la position définie, par le système de gestion, permet donc au système de maintien de préserver le composant dans la position d'attente sur le rail. Cette position d'attente est maintenue tant que le composant précédent reste en position dans la zone de sortie du rail. Lorsque le système de gestion détecte l'extraction d'un composant positionné dans la zone de sortie en vue de son encliquetage sur une pièce, au moyen d'un dispositif de manipulation dudit composant, ledit système de gestion redémarre les moyens de translation en va-et-vient de la plaque, ladite plaque redescendant ou remonte, selon la configuration. L'actionnement de la plaque active concomitamment le système de transfert qui permet de déplacer le composant de la zone d'attente jusque dans la zone de sortie où il demeure tant qu'il n'est pas extrait de ladite zone de sortie par ledit dispositif de manipulation. Le redémarrage de la plaque permet donc de commencer un nouveau cycle.

Cette conception du dispositif de distribution est très avantageuse en regard des dispositifs de distribution antérieurs décrits dans les demandes de brevet WO2010004211A1, WO2012007669A1 et FR3004978A1 voire les bols vibrant, puis qu'elle permet la manipulation d'un seul composant à la fois dans le rail de guidage, alors que les dispositifs de distribution antérieurs précités acheminent successivement les composants de la zone d'entrée jusque la zone de sortie en les poussant les uns à la suite des autres dans le rail de guidage, ce qui nécessite un dimensionnement précis du rail de guidage et des composants pour éviter tout blocage par chevauchement entre lesdits composants. Ainsi, l'invention évite tout problème de chevauchement de composants dans le rail et offre beaucoup plus de tolérance sur les dimensions du rail et des composants, ce qui permet avantageusement la distribution de différentes variantes d'agrafes (en dimensions et en forme) au moyen d'un même dispositif de distribution selon l'invention, sans aucune modification de celui-ci.

En outre, la conception du dispositif de distribution selon l'invention permet avantageusement sa miniaturisation, puisque les composants sont acheminés un par un jusqu'à la zone de sortie sur le rail, ce qui permet de limiter le magasin qui peut recevoir un seul composant, voire deux ou trois composants tout au plus, et aussi de limiter par conséquent les dimensions de la plaque, adaptées aux dimension du magasin. Ce qui a aussi une incidence sur le dimensionnement de l'actionneur de la plaque, réduit en conséquence.

Selon un premier mode de réalisation du dispositif de distribution objet de l'invention, la zone de sortie est disposée à un niveau inférieur à la zone d'entrée, le rail de guidage s'étendant vers le bas. Cette conception permet avantageusement un encliquetage de l'agrafe sur une pièce, par le dessus de cette pièce. Cette conception offre à l'opérateur une visibilité optimale de toutes les opérations de montage des agrafes sur les pièces.

Préférentiellement, selon ce premier mode de réalisation du dispositif de distribution, le système de maintien comprend une lame, ou tout autre pièce de maintien, configurée pour être déplacée d'une position dégagée où le composant peut glisser dans la rainure du rail de guidage, à une position de butée où le composant reste bloqué dans la rainure au niveau de la zone d'attente. En outre, le système de maintien comprend des moyens de déplacement de la lame configurés pour déplacer ladite lame en position de butée sous l'action de la plaque disposée dans la position définie ou lorsque ladite plaque se déplace vers cette position définie, et pour déplacer la lame en position dégagée sous l'action du redémarrage de la plaque qui quitte ladite position définie. De préférence, la position définie est la position basse de la plaque, mais cette position définie peut aussi être la position haute de la plaque, selon la configuration des moyens de déplacement de la lame et la position de détection de la présence du composant atteignant la zone d'attente ou sur le point de l'atteindre.

Préférentiellement, selon ce premier mode de réalisation du dispositif de distribution, le système de transfert est mis en oeuvre par le système de maintien et le rail s'étendant vers le bas, la désactivation dudit système de maintien libérant le composant et permettant la descente par gravité du composant dans le rail, jusque dans la zone de sortie. Cette conception permet de simplifier la mise en oeuvre du dispositif et de réduire son coût de fabrication et son encombrement.

Préférentiellement, selon ce premier mode de réalisation du dispositif de distribution, le système de gestion comprend un capteur de présence d'un composant dans la zone d'attente, la détection pouvant se faire lorsque le composant atteint ou est sur le point d'atteindre ladite zone d'attente, selon la configuration des moyens de déplacement de la lame. En effet, lorsque les moyens de déplacement actionnent la lame en position de butée au moment où la plaque quitte la position haute, le capteur de présence peut être positionné directement au niveau de la zone d'attente, dès l'instant où cette zone d'attente est atteinte par le composant avant que la plaque n'atteigne la position définie, dans ce cas la position basse. Au contraire, dans une variante, lorsque les moyens de déplacement actionnent la lame en position de butée au moment où la plaque atteint la position haute, il est alors préférable de détecter le composant sur l'arête supérieure inclinée de la plaque, en position haute de ladite plaque. La présence d'un composant sur l'arête inclinée de la plaque implique naturellement son transfert par gravité dans la zone d'entrée du rail, puis jusqu'à la zone d'attente, étant donné que le rail s'étend vers le bas. La détection de la présence du composant sur l'arête inclinée permet donc au système de gestion de détecter qu'un composant s'apprête à arriver en zone d'attente et donc de maintenir la lame en position de butée en arrêtant la plaque en position haute.

Selon un second mode de réalisation du dispositif de distribution objet de l'invention, la zone de sortie est disposée à un niveau supérieur à la zone d'entrée, le rail de guidage s'étendant vers le haut. Cette conception permet avantageusement un encliquetage de l'agrafe sur une pièce, par le dessous de cette pièce.

Préférentiellement, selon ce second mode de réalisation du dispositif de distribution, le système de maintien comprend un bras longitudinal muni d'une extrémité supérieure et configuré pour translater dans la rainure concomitamment à la plaque. Ainsi, le bras translate en va-et-vient avec la plaque, ce qui permet au moyen de translation en va-et-vient de la plaque d'actionner également le bras. En outre, l'extrémité supérieure du bras est configurée pour se loger dans un composant disposé dans la zone d'entrée et pour déplacer ledit composant jusque la zone d'attente dans le rail, lors de la montée de la plaque jusqu'à sa position haute. Ainsi, lorsqu'un composant est extrait par la plaque qui translate vers le haut, celui-ci est alors transféré dans la zone d'entrée du rail. Ensuite, la plaque et le bras descendent puis remontent, ce qui permet à l'extrémité supérieure du bras de se loger dans la gorge circulaire du composant et de le translater dans la rainure du rail jusqu'à atteindre la zone d'attente, lorsque la plaque et le bras sont en position haute, correspondant dans ce cas à la position définie de la plaque.

Selon ce second mode de réalisation du dispositif de distribution, le système de gestion comprend un capteur de présence qui détecte un composant disposé sur l'extrémité supérieure du bras, lorsque la plaque atteint sa position haute. Ainsi la détection de la présence du composant s'effectue directement lorsque le bras amène le composant dans la zone d'attente, ce qui permet au système de gestion d'arrêter les moyens de translation en va-et-vient de la plaque et de maintenir ladite plaque et le bras en position haute, et ainsi le composant en zone d'attente.

Selon ce second mode de réalisation du dispositif de distribution, le système de transfert comprend une pièce de transfert comprenant au moins un doigt rétractable monté en rappel par ressort, grâce à un élément rappel, ledit doigt étant configuré pour laisser entrer le composant dans la zone d'attente et venir en butée au-dessous dudit composant une fois la zone d'attente atteinte. En outre, le système de transfert comprend des moyens de déplacement de la pièce de transfert par rapport au rail de guidage configurés pour déplacer l'au moins un doigt rétractable le long de la rainure en le maintenant en butée contre le composant, de la zone d'attente jusque la zone de sortie. Le déplacement du doigt permet de pousser le composant le long de la rainure jusqu'à atteindre la zone de sortie.

Dans une réalisation du dispositif de distribution selon l'invention, le rail de guidage comprend à son extrémité distale une portion recourbée dans laquelle est mise en oeuvre la zone de sortie. Cette portion recourbée permet de positionner le composant dans un plan incliné par rapport à la verticale, notamment un plan horizontal.

Dans une réalisation du dispositif de distribution selon l'invention, les moyens de translation en va-et-vient de la plaque comprennent un vérin. Ce vérin peut être pneumatique, hydraulique ou électrique, de préférence pneumatique, à simple effet ou à double effet. La tige du vérin est assujettie à la plaque.

Selon le dispositif de distribution objet de l'invention, le système de gestion comprend un capteur de présence agencé dans la zone de sortie. D'autres capteurs sont envisageables sur le dispositif, notamment un capteur de présence d'au moins un composant dans le magasin.

L'invention concerne aussi une installation qui comprend au moins un dispositif de distribution de composants selon l'invention et au moins un dispositif d'alimentation en composants raccordé à l'au moins un dispositif de distribution par au moins un conduit. Le dispositif d'alimentation est configuré pour stocker en vrac une quantité importante de composants et pour acheminer successivement lesdits composants au travers de l'au moins un conduit jusque dans le magasin de l'au moins un dispositif de distribution, sous la commande du système de gestion dudit dispositif de distribution qui détecte la présence ou l'absence d'au moins un composant dans ledit magasin.

En complément, l'installation comprend au moins un dispositif de manipulation, par exemple un pousseur, un percuteur voire un robot, qui permet d'extraire le composant de la zone de sortie du dispositif de distribution pour son encliquetage sur une pièce. Le nombre de dispositifs de manipulation dépend notamment du nombre de dispositifs de distribution, en particulier lorsque ces dispositifs de manipulation sont de type pousseur ou percuteur.

L'invention concerne également un procédé de distribution de composants de type agrafe munie d'une gorge circulaire, au moyen d'un dispositif de distribution. Le procédé comprend une étape d'activation en translation va-et-vient d'une plaque disposée dans un magasin de réception d'au moins un composant, ladite plaque étant munie d'une arête supérieure inclinée dans laquelle vient se loger la gorge circulaire du composant, ce qui permet l'extraction du composant hors du magasin, au moyen de ladite plaque. Le procédé comprend également une étape de transfert du composant présent sur l'arête supérieure inclinée de la plaque sur une zone d'entrée d'un rail de guidage du composant, en position haute de la plaque.

En outre, selon l'invention, ledit procédé comprend les étapes suivantes :
- d'acheminement du composant de la zone d'entrée jusqu'à une zone d'attente sur le rail de guidage ;
- d'activation d'un système de maintien du composant dans la zone d'attente, préalablement à ou lors de l'arrivée de la plaque dans une position définie ;
- d'arrêt de la plaque dans la position définie, notamment la position haute ou basse, lors de la détection d'un composant atteignant ou sur le point d'atteindre la zone d'attente dans le rail de guidage ;
- de démarrage de la plaque lorsque le composant précédent situé dans une zone de sortie du rail de guidage est extrait du dispositif de distribution ;
- d'activation d'un système de transfert du composant disposé dans la zone d'attente jusque dans la zone de sortie, ledit transfert étant occasionné par ledit démarrage de la plaque.

Ce procédé permet l'alimentation successive de composants de type agrafe depuis un magasin jusqu'à une zone de sortie d'un rail de guidage en transférant individuellement les composants dans le rail de guidage, ce qui supprime tout risque de chevauchement de composants dans ledit rail de guidage et offre donc plus de possibilités sur les dimensions et les formes du rail de guidage et du composant.

### Brève description des figures

Les caractéristiques et avantages de l'invention apparaîtront à la lecture de la description suivante s'appuyant sur des figures, parmi lesquelles :
- les figures 1 à 10 illustrent différentes vues partielles ou entières d'un mode de réalisation du dispositif de distribution selon l'invention suivant différentes étapes de fonctionnement, pour l'acheminement d'un composant jusqu'à la sortie dudit dispositif ;
- les figures 11 à 18 illustrent différentes vues partielles ou entières d'une variante de réalisation du dispositif de distribution selon l'invention suivant différentes étapes de fonctionnement, pour l'acheminement d'un composant jusqu'à la sortie dudit dispositif.

### Description détaillée

Dans la suite de la description, les mêmes références sont utilisées pour définir les mêmes caractéristiques selon les différentes variantes de réalisation du dispositif 1 de distribution. En outre, le terme agrafe est utilisé pour définir le composant distribué au moyen dudit dispositif 1.

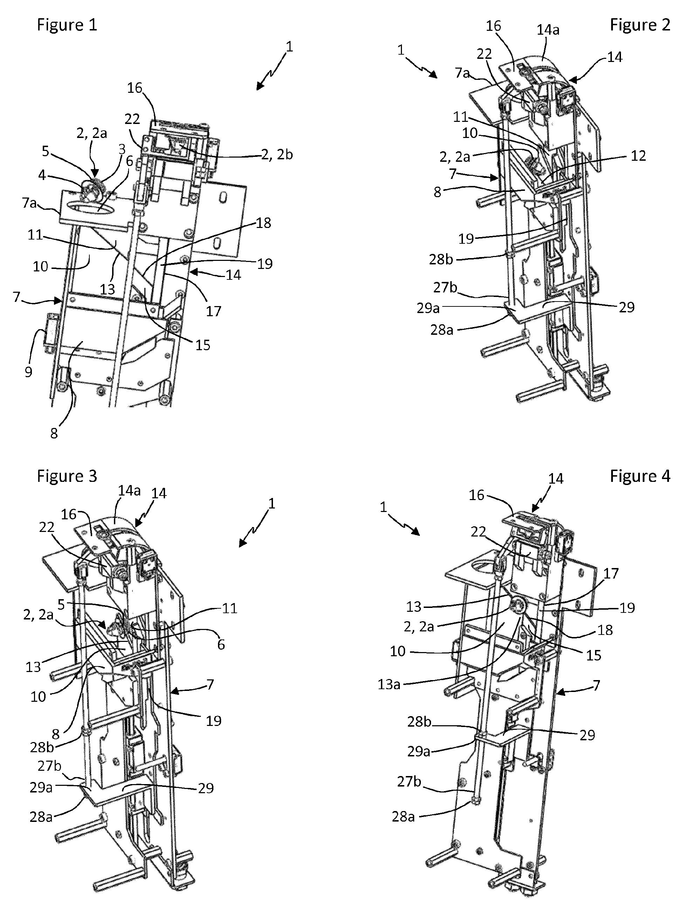

Une telle agrafe 2 comprend une tête 3, un corps 4 et une gorge circulaire 5, comme illustré notamment en figure 1. La position de la gorge circulaire 5 peut varier, celle-ci pouvant être disposée sur la tête 3, ou entre la tête 3 et le corps 4. La tête 3 de l'agrafe 2 est destinée à être mis en place par encliquetage sur une pièce (non illustrée) qui sera agrafée ultérieurement sur un support (non illustré) en encliquetant le corps 4 de l'agrafe 2 sur ce support.

Les figures 1 à 10 illustrent un premier mode de réalisation du dispositif 1 de distribution d'agrafes 2, ladite distribution se faisant par le dessous, c'est-à-dire que l'agrafe 2 est extraite dudit dispositif 1 de sorte à permettre son agrafe sur la face inférieure d'une pièce (non illustrée).

Sur la figure 1, le dispositif 1 reçoit une agrafe 2a qui est introduite par un orifice 6 agencé sur une paroi supérieure 7a du carter 7 dudit dispositif 1 de sorte à tomber dans un magasin 8 fixé audit carter 7. Les dimensions du magasin 8 sont petites et adaptées à l'agrafe 2a, ledit magasin 8 permettant la réception d'une agrafe 2 ou, au plus, deux voire trois agrafes 2. Un capteur 9, par exemple une cellule photoélectrique, permet de détecter la présence d'une agrafe 2a dans le magasin 8 pour déclencher l'alimentation d'une agrafe 2, 2a au moyen d'un dispositif d'alimentation (non illustré) qui est raccordé à l'orifice 6 au moyen d'un conduit (non illustré). Ce dispositif d'alimentation est configuré pour stocker en vrac une quantité importante d'agrafes 2 et pour acheminer successivement lesdites agrafes 2 au travers du conduit jusqu'au dispositif 1. Ce dispositif d'alimentation comprend, dans un mode de réalisation préférentiel, toutes les caractéristiques du dispositif d'alimentation décrit dans la demande de brevet publiée sous le numéro FR3004978A1 à laquelle l'homme du métier est invité à se reporter. On pourrait toutefois envisager d'autres variantes de mise en oeuvre de dispositif d'alimentation, sans sortir du cadre de la présente invention qui porte essentiellement sur le dispositif 1 de distribution d'agrafes 2. L'installation comprend un automate de gestion (non illustré) qui reçoit l'information du capteur 9 et qui commande le dispositif d'alimentation pour amener une agrafe 2a dans le magasin 8 du dispositif 1 de distribution lorsque ce dernier est vide. Cette automate de gestion commande également le dispositif 1 de distribution selon l'invention.

Tel qu'illustré en regard des figures 1 à 10, le dispositif 1 comprend une plaque 10 qui est agencée dans ledit magasin 8. Cette plaque 10 est de préférence disposée verticalement, et parallèlement par rapport à une paroi arrière 11 du carter 7, tout en maintenant un léger espacement entre la plaque 10 et la paroi arrière 11. En outre, le magasin 8 comprend un fond 12 qui présente une inclinaison favorisant le déplacement de l'agrafe 2a vers la plaque 10. La plaque 10 comprend une épaisseur inférieure à la largeur de la gorge circulaire 5 sur l'agrafe 2, ce qui permet l'engagement de l'arête supérieure 13 de la plaque 10 à l'intérieur de cette gorge circulaire 5. En outre, l'espacement entre la plaque 10 et la paroi arrière 11 est dimensionné pour correspondre à au moins l'épaisseur de la tête 3 de l'agrafe 2, ce qui permet le positionnement de cette tête 3 entre la plaque 10 et la paroi arrière 11 lorsque l'arête supérieure 13 est logée dans la gorge circulaire 5. Cela permet d'imposer le sens de positionnement de l'agrafe 2 lors de son engagement sur la plaque 10, sinon l'agrafe 2 retombe dans le magasin 8. La plaque 10 est actionnée en va-et-vient grâce à un vérin (non illustré), de préférence électrique ou pneumatique et à double effet, dont le piston est assujettie à la plaque 10. Ce vérin est activé par le biais de l'automate de gestion. La translation en va-et-vient permet à l'arête supérieure 13 de la plaque 10 de saisir de manière aléatoire l'agrafe 2 disposée dans le magasin 8, comme illustré en regard des figures 2 et 3. L'arête supérieure 13 de la plaque 10 est inclinée vers le bas, du côté droit. Cette inclinaison de l'arête supérieure 13 et la forme circulaire de la gorge 5 de l'agrafe 2 permettent à cette dernier de rouler et de descendre le long de l'arête supérieure 13 jusqu'à son extrémité inférieure 13a, comme illustré en regard des figures 3 et 4.

Tel qu'illustré en regard des figures 1 à 10, le dispositif 1 comprend un rail de guidage 14 qui comprend une zone d'entrée 15, une zone de sortie 16 et une rainure 17 s'étendant de préférence verticalement vers le haut de la zone d'entrée 15 jusque la zone de sortie 16. Cette zone de sortie 16 est agencée après une partie courbée 14a du rail de guidage 14, ce qui permet de positionner ladite zone de sortie 16 avec une inclinaison par rapport à la verticale, par exemple horizontalement, cette inclinaison dépendant notamment de la manière dont il est nécessaire d'extraire l'agrafe 2 pour son encliquetage sur la pièce. La zone d'entrée 15 comprend une arête 18 inclinée, de préférence de manière identique à l'arête supérieure 13 de la plaque 10. Lorsque la plaque 10 atteint sa position haute comme illustrée en figures 1, 4 et 5, l'arête supérieure 13 est disposée dans l'alignement de l'arête 18 de la zone d'entrée 15, ce qui permet à l'agrafe 2a de rouler sur l'arête 18 et pénétrer dans ladite zone d'entrée 15.

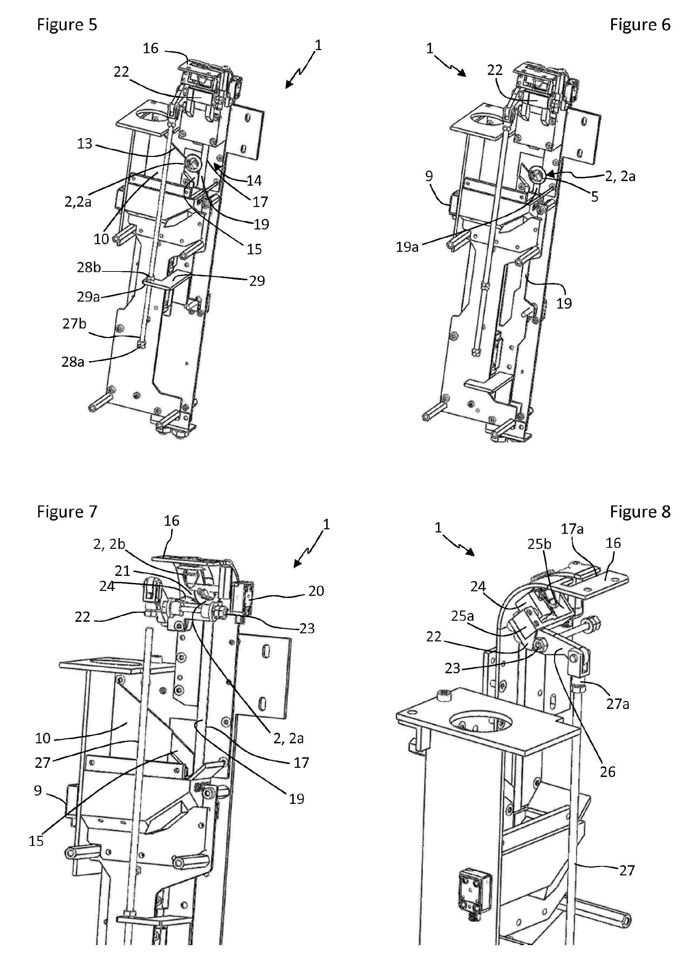

Tel qu'illustré sur les figures 1 à 10, le dispositif 1 comprend un bras 19 qui s'étend vers le haut, au-delà de la position de l'arête supérieure 13 de la plaque 10. De préférence, le bras 19 et la plaque 10 sont réalisés en une seule et même pièce, mais on peut prévoir deux pièces assujetties entre elles et au piston du vérin (non illustré). Le bras 19 est disposé de manière attenante à l'arête 18 de la zone d'entrée 15 et est de largeur adaptée à la rainure 17 du rail de guidage 14. Lors d'une translation de la plaque 10 vers le haut, le bras 19 translate concomitamment vers le haut à l'intérieur de la rainure 17. Le bras 19 et la course du vérin sont dimensionnés pour que lorsque la plaque 10 atteint sa position basse, l'extrémité supérieure 19a du bras 19 soit disposée légèrement en-dessous de l'arête 18 de la zone d'entrée 15. L'épaisseur du bras 19 est dimensionnée pour permettre l'insertion de la gorge circulaire 5 de l'agrafe 2, 2a dans son extrémité supérieure 19a. Lorsque la plaque 10 atteint sa position basse, l'agrafe 2a présente sur l'arête 18 de la zone d'entrée 15 roule et vient se loger sur l'extrémité supérieure 19a du bras 19, comme l'illustre la figure 6.

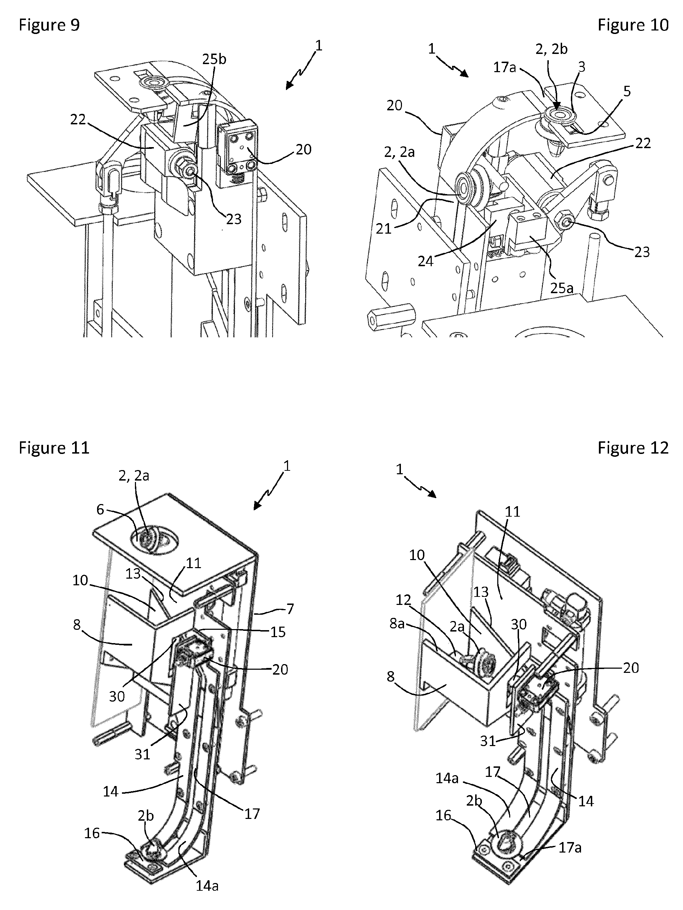

Ensuite, la plaque 10 remonte, ce qui permet concomitamment au bras 19 de remonter en emportant dans la rainure 17 l'agrafe 2a logée sur l'extrémité supérieure 19a. Le dispositif 1 comprend un second capteur 20 qui détecte la présence de l'agrafe 2a dans le rail de guidage 14 lorsque la plaque 10 atteint sa position haute. Ce second capteur 20 transmet l'information de détection de l'agrafe 2a à l'automate, lequel arrête la plaque 10 dans sa position haute. L'agrafe 2a se situe alors dans une zone d'attente 21 sur le rail 14, comme l'illustre notamment les figures 7 et 10. L'arrêt de la plaque 10 est maintenu par l'automate tant que l'agrafe 2b précédente est présente dans la zone de sortie 16 du rail de guidage 14.

Le dispositif 1 comprend une pièce de transfert 22 qui est montée en liaison pivot 23 par rapport au carter 7. Cette pièce de transfert 22 comprend un doigt 24 et deux pattes latérales 25a, 25b, tel qu'illustré en figure 8, le doigt 24 étant articulé par rapport à la première patte latérale 25a, et monté en rappel en position sortie vis-à-vis de cette première patte latérale 25a grâce à un ressort (non illustré) voire à tout autre élément de rappel. Lorsque le bras 19 monte l'agrafe 2a dans la rainure 17 du rail de guidage 14, jusqu'à la zone d'attente 21, le doigt 24 se rétracte pour laisser passer l'agrafe 2a dans ladite zone d'attente 21. Puis le doigt 24 revient dans sa position normale repos sous l'action du ressort de rappel (non illustré) ou de tout autre élément de rappel, ledit doigt 24 et la seconde patte latérale 25a étant alors positionnés sous l'agrafe 2a, comme l'illustre notamment les figures 7 à 10.

L'extraction de l'agrafe 2b disposée dans la zone de sortie 16 est réalisée au moyen d'un dispositif de manipulation (non illustré), lequel peut être par exemple un système de percussion présentant des caractéristiques identiques ou équivalentes à celles du système de percussion décrit dans la demande de brevet FR3004978A1, à laquelle l'homme du métier est invité à ce reporter. Un tel système de percussion permet l'extraction de l'agrafe 2b en la poussant dans la rainure 17a de la zone de sortie 16, pour encliqueter la tête 3 de l'agrafe 2b dans une pièce (non illustrée) destinée elle-même à être fixée sur un support (non illustré) en encliquetant le corps 2 de l'agrafe 2b sur ledit support. Ce dispositif de manipulation est de préférence indépendant du dispositif 1 de distribution, mais on pourrait également agencer le système de percussion précité sur le carter 7 dudit dispositif 1. Ce dispositif de manipulation peut également être constitué d'un robot ou de tout autre moyen de manipulation d'agrafe 2b pour son encliquetage sur une pièce. L'automate est configuré pour détecter l'extraction de l'agrafe 2b de la zone de sortie 16. Par exemple, l'actionnement du système de percussion par l'automate traduit implicitement l'extraction de cette agrafe 2b. On peut également prévoir l'agencement d'un capteur supplémentaire (non illustré), par exemple une cellule photoélectrique, qui détecte l'absence d'agrafe 2b dans la zone de sortie 16. La trajectoire d'extraction de l'agrafe 2b de la zone de sortie 16 conditionne la forme de la partie courbée 14a du rail de guidage 14 et la direction de la rainure 17a sur ladite zone de sortie 16.

L'extraction de l'agrafe 2b de la zone de sortie 16 permet à l'automate de déclencher le transfert de l'agrafe 2a suivante maintenue dans la zone d'attente 21, jusque ladite zone de sortie 16. Pour cela, l'automate redémarre la plaque 10 qui descend et entraîne concomitamment le bras 19. L'extrémité supérieure 19a du bras 19 se dégage de la gorge circulaire 5 de l'agrafe 2a, la descente de cette agrafe 2a dans la rainure 17 étant toutefois bloquée par le doigt 24 de la pièce de transfert 22. La pièce de transfert 22 comprend une partie arrière 26 qui s'étend en sens inverse de la position du doigt 24, vis-à-vis de la liaison pivot 23. La partie arrière 26 est assemblée en liaison pivot à une extrémité 27a d'une bielle 27, comme illustré en figure 8. Tel qu'illustré en figures 2 à 5, notamment, la seconde extrémité 27b de la bielle 27 comprend un premier élément de butée 28a, de préférence mis en oeuvre au moyen d'un écrou et contre-écrou vissés sur la bielle 27 qui, pour cela, est filetée. Un second élément de butée 28b est agencé sur la bielle 27, ce second élément de butée 28b est également mis en oeuvre au moyen d'un écrou et contre-écrou vissés sur la bielle 27 étant assemblée directement ou indirectement avec la plaque 10. Ainsi, les positions des éléments de butée 28a, 28b peuvent être réglées. Une équerre 29 comprend une extrémité 29a qui comprend un orifice de passage la bielle 27 et qui est disposée entre les deux éléments de butée 28a, 28b, comme illustré en figures 2 à 5. Cette équerre 29 est assujettie à la plaque 10 et au bras 19. Ainsi, lors de la descente de la plaque 10, l'équerre 29 vient en appui contre le premier élément de butée 28a, ce qui entraine la bielle 27 vers le bas et fait pivoter vers le haut du doigt 24 de la pièce de transfert 22. Inversement, lors de la montée de la plaque 10, l'équerre 29 vient en appui contre le second élément de butée 28b, ce qui entraîne la bielle 27 vers le haut et fait pivoter vers le bas ledit doigt 24. L'ajustement de la position des éléments de butée 28a, 28b sur la bielle 27 permet de régler les positions d'appui de l'équerre 29, en fonction de la course du vérin, ce qui assure le pivotement vers le bas dans la zone d'attente 21 au moment où l'agrafe 2a est amené par le bras 19 dans ladite zone d'attente, ce qui forme le doigt 24 à ce rétracter pour passer en-dessous de cette agrafe 2a. L'automate effectue une temporisation pour arrêter le vérin et maintenir l'agrafe 2a dans la zone d'attente puis, lorsque l'agrafe 2b précédente est extraite de la zone de sortie 16, l'automate redémarre de la plaque 10, ce qui entraîne d'abord le dégagement de l'extrémité supérieure 19a du bras 19 vis-à-vis de l'agrafe 2a qui est alors maintenue par le doigt 24 et la seconde patte latérale 25b et, ensuite, le pivotement vers le haut du doigt 24 et de la seconde patte latérale 25b, ce qui transfère l'agrafe 2a de la zone d'attente 21 vers la zone de sortie 16, comme illustré en figures 8 et 9.

Le capteur 20 détecte l'absence de l'agrafe 2a dans la zone d'attente 21. L'automate effectue alors un nouveau cycle d'activation de la plaque 10 en va-et-vient jusqu'à ce que le bras 19 amène une nouvelle agrafe 2a préalablement extrait du magasin 8, jusque dans la zone d'attente 21 où l'automate arrête à nouveau la plaque 10 et maintient ladite agrafe 2a en position dans ladite zone d'attente 21 tant que l'agrafe 2b précédente n'est pas extraite de la zone de sortie 16. Et ainsi de suite.

Le principe de fonctionnement reste identique avec la seconde variante de réalisation du dispositif 1 de distribution d'agrafe 2 illustré en figures 11 à 18. Toutefois, à la différence de la première variante de réalisation du dispositif 1 illustrée en figures 1 à 10, le rail de guidage 14 selon cette seconde variante s'étend vers le bas, la zone de sortie 16 étant disposée en-dessous de la zone d'entrée 15, ledit dispositif 1 étant configuré pour encliqueter les agrafes 2b par le dessus d'une pièce (non illustrée). L'extraction d'une agrafe 2a hors du magasin 8 pour son acheminement jusque dans la zone d'entrée 15 du rail de guidage 14 s'effectue de manière identique au premier mode de réalisation précité, au moyen de la plaque 10 qui présente une arête supérieure inclinée 13 et qui est actionnée en va-et-vient au moyen d'un actionneur de type vérin (non illustré). Lorsque la plaque 10 est en position haute et qu'une agrafe 2a est logée sur l'arête supérieure 13 inclinée, celle-ci roule dans le sens de l'inclinaison et est transférée sur l'arête 18 de la zone d'entrée 15, cette arête 18 étant également inclinée vers le bas, pour permettre à l'agrage 2a de continuer à rouler et de s'engager dans la rainure 17 du rail de guidage 14 s'étendant vers le bas. Un capteur 9 détecte la présence d'au moins une agrafe 2a dans le magasin 8 et transmet l'information à l'automate qui gère l'approvisionnement

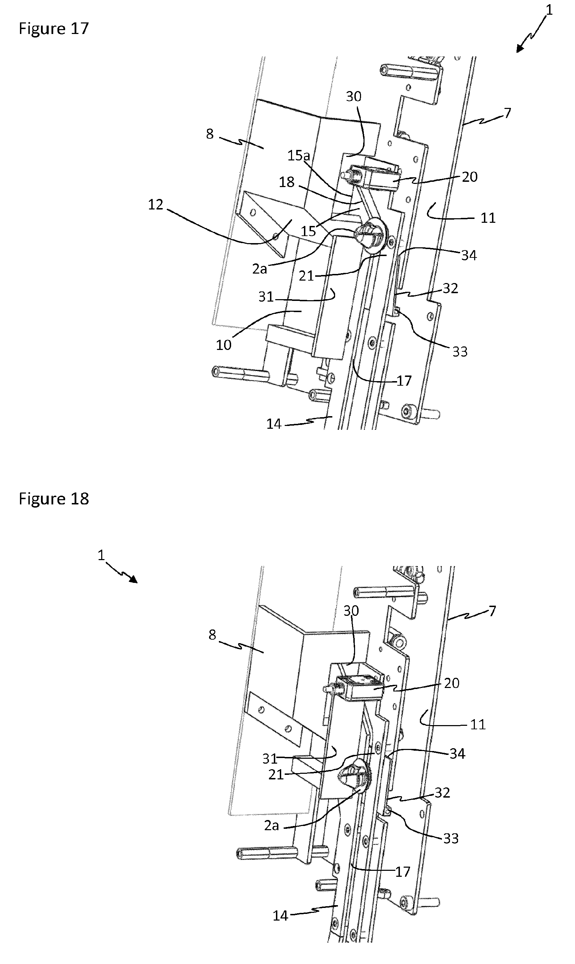

Tel qu'illustré en regard figures 11 à 14, notamment, le magasin 8 comprend une ouverture latérale 30 qui permet de laisser passer l'agrafe 2a lors de son transfert l'arête 18 de la zone d'entrée 15 vers la rainure 17. Une paroi latérale 31 est assujettie à la plaque 10 et fait office de barrière bloquant la descente de l'agrafe 2a situé dans la zone d'entrée 15, vers la rainure 17, lorsque la plaque 10 est en position haute. Au contraire, lorsque la plaque 10 descend, la paroi latérale 31 descend concomitamment et libère le passage de l'agrafe 2a qui peut descendre dans la rainure 17. En outre, cette paroi latérale 31 bloque l'ouverture latérale 30 lorsqu'une agrafe 2 est injectée dans le magasin 8, ce qui évite l'éjection de cette agrafe 2a hors du magasin en passant par ladite ouverture latérale 30. On peut envisager des parois supplémentaires (non illustrées) autour de la partie supérieure 8a du magasin 8 afin d'éviter toute éjection de l'agrafe 2a introduite par l'ouverture 6 du carter 7. On peut également envisager une paroi latérale supplémentaire (non illustrée) assujettie à la paroi latérale 31, ladite paroi latérale supplémentaire étant configurée pour se positionner derrière l'ouverture latérale 30 à l'intérieur du magasin 8, de manière attenante au bord latéral 15a de la zone d'entrée 15, illustré en figure 17, lorsque la plaque 10 est en position basse, ce qui permet d'alimenter une agrafe 2a dans le magasin 8 lorsque la plaque 10 est en position basse, sans risque que cette agrafe 2a soit éjectée par l'ouverture latérale 30. Inversement, cette paroi latérale supplémentaire est configurée pour être dégagée vers le haut, hors du magasin 8 et de l'ouverture latérale 30, lorsque la plaque 10 est en position haute, la paroi latérale 31 remplissant alors sa fonction de barrière telle que précitée.

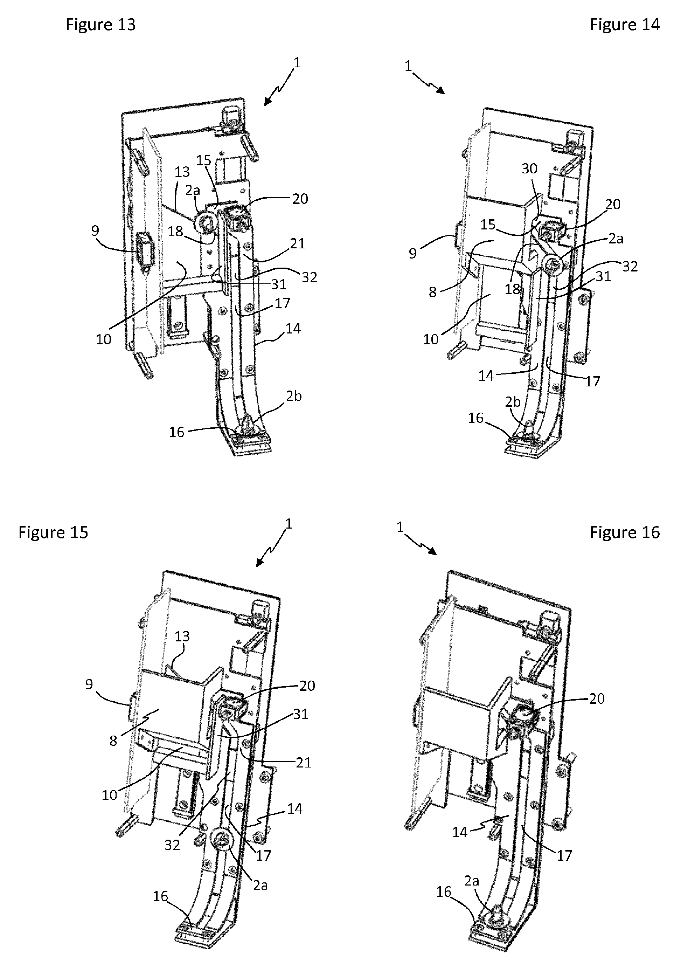

Tel qu'illustré en regard des figures 13, 14, 17 et 18, notamment, le dispositif 1 comprend une lame 32 qui est agencée entre le rail de guidage 14 et la paroi arrière 11 du carter 7, et qui est montée en liaison pivot 33 vis-à-vis de la paroi arrière 11 avec un rappel par ressort (non illustré) ou tout autre élément de rappel. Lorsque la plaque 10 monte en position haute, celle-ci vient en appui contre la lame 32, qui pivote vers l'arrière dans une position dégagée vers l'arrière vis-à-vis de la rainure 17, comme illustré par notamment en figure 17. Au contraire, lorsque la plaque 10 descend en position basse, le ressort de rappel pivote la lame 32 dans une position d'appui contre la rainure 17, comme illustré notamment en figure 18. Dans la position dégagée illustrée en figure 17, la lame 32 laisse passer l'agrafe 2a dans la rainure 17 et, inversement, dans la position d'appui illustrée en figure 18, la lame 32 bloque le passage de l'agrafe 2a dans une zone d'attente 21 de la rainure 14.

Tel qu'illustré en regard des figures 13 à 16, notamment, lorsque l'agrafe 2a est positionnée dans la zone d'entrée 15, la paroi latérale 31 bloque provisoirement son passage vers la rainure 17. Alors que la plaque 10 amorce sa descente, la paroi latérale 31 continue à bloquer le passage de l'agrafe 2a, tandis que la descente de ladite plaque 10 permet à la lame 32 de passer en position d'appui sur la rainure 17 du rail de guidage 14. La plaque 10 continue ensuite sa descente, ce qui permet le dégagement de la paroi latérale 31 vis-à-vis de l'ouverture latérale 30. L'agrafe 2a peut alors s'engager dans la rainure puis reste bloquée par la lame 32 dans la zone d'attente 21. Le capteur 20 détecte la présence d'une agrafe 2a dans cette zone d'attente 21, l'information étant communiquée à l'automate qui arrête la plaque 10 en position basse, ce qui maintien la lame 32 en position d'appui et, ainsi, l'agrafe 2a dans une position d'attente sur le rail de guidage 14. Cette position de l'agrafe 2a dans la zone d'attente 21 est maintenue tant que l'agrafe précédente 2b demeure dans la zone de sortie 16. Une fois cette agrafe 2b précédente extraite de la zone de sortie 16 par un dispositif de manipulation (non illustré), par exemple un percuteur ou un pousseur tel que précité, l'automate redémarre la plaque 10 qui se déplace vers le haut et actionne la lame 32 dans la position dégagée, ce qui permet alors le transfert par gravité de l'agrafe 2a jusque dans la zone de sortie 16. Ainsi, la lame 32 contribue à la fois au maintien de l'agrafe 2a en zone d'attente 21 lors de l'arrêt de la plaque 10 en position basse, et au transfert de l'agrafe 2a par gravité sur le rail de guidage 14, suite du redémarrage de ladite plaque 10 vers le haut.

On peut envisager des variantes de mise en oeuvre. La position d'arrêt de la plaque 10 pour le maintien de l'agrafe 2a dans la zone d'attente 21 pourrait être définie différemment en fonction de la configuration du système de maintien de l'agrafe 2a en position d'attente, de la configuration du système de transfert de l'agrafe 2a vers la zone de sortie 16 et de l'agencement du rail de guidage 14.

Dans le second mode de réalisation des figures 11 à 18, par exemple, on peut envisager un mécanisme de transmission entre la lame 32 et la plaque 10 qui permet de déplacer la lame 32 en position dégagée lors de la descente de la plaque 10, et en position d'appui lorsque la plaque est montée en position haute, en retirant en outre la paroi 31. Dans ce cas, lorsqu'une agrafe 2a est logée sur l'arrête supérieure 13 de la plaque 10 et que ladite plaque 10 atteint sa position haute, l'agrafe 2a est transférée dans la zone d'entrée 15 puis directement dans la zone d'attente où ladite agrafe 2a reste bloquée du fait de la position d'appui de la lame 32. Dans ce cas, le capteur 20 est agencé pour détecter la présence de l'agrafe 2a directement sur l'arête supérieure 13, de sorte à arrêter aussitôt la plaque 10 en position haute. Le redémarrage de la plaque 10 vers le bas permet ensuite de déplacer la lame 32 en position dégagée pour autoriser le transfert de l'agrafe 2a de la zone d'attente 21 vers la zone de sortie 16.

L'invention concerne également une installation qui comprend au moins un dispositif 1 de distribution d'agrafe 2 présentant de préférence les caractéristiques de l'un ou l'autre des deux modes de réalisation décrits ci-avant, et au moins un dispositif d'alimentation (non illustré) en agrafe qui, comme décrit précédemment, présente de préférence des caractéristiques du dispositif d'alimentation décrit dans la demande de brevet FR 3004978 A1. On pourra notamment prévoir plus d'un dispositif 1 de distribution d'agrafes 2 et un seul dispositif d'alimentation qui achemine des agrafes 2 dans les magasins 8 de chacun desdits dispositif 1 de distribution, par le biais de conduits d'alimentation. L'installation comprendra également des dispositifs de manipulation des agrafes configurés pour extraire lesdites agrafes 2b des zones de sortie 16 des dispositifs 1 de distribution, comme décrit précédemment. Ces dispositifs de manipulation peuvent être des percuteurs, tel que celui décrit dans la demande de brevet FR3004978A1, qui sont rapportés sur les dispositifs 1 de distribution ou, agencés sur l'installation indépendamment desdits dispositifs 1, à proximité de chacune des zone de sortie 16 pour extraire les agrafes 2 disposées dans les zones de sortie 16. On peut aussi envisager un dispositif de manipulation commun à tous les dispositifs 1 de l'installation, par exemple un robot manipulateur.

La description détaillée qui précède de deux modes de réalisation particulier de l'invention n'a aucun caractère limitatif. Bien au contraire, elle a pour objectif d'ôter toute éventuelle imprécision quant à sa portée. Ainsi, de nombreuses variantes pourront être envisagées dans le cadre de l'invention, notamment quant aux conceptions du système de maintien de l'agrafe 2a dans la zone d'attente 21 et du système de transfert de l'agrafe 2a de la zone d'attente 21 vers la zone de sortie 16.

## Revendications

1. Dispositif 1) de distribution de composants (2, 2a, 2b) du type agrafe munie d'une gorge circulaire (5), comprenant :
- un magasin (8) pour la réception d'au moins un composant (2a),
- une plaque (10) agencée dans le magasin et des moyens de translation en va-et-vient de la plaque, ladite plaque étant munie d'une arête supérieure inclinée (13) configurée pour se loger dans la gorge circulaire du composant et le faire rouler dans le sens de l'inclinaison,
- un rail de guidage (14) muni d'une zone d'entrée (15), d'une zone de sortie (16) et d'une rainure (17), la zone d'entrée étant configurée pour réceptionner le composant logé sur l'arête supérieure inclinée de la plaque lorsque ladite plaque est en position haute, la zone de sortie étant configurée pour permettre l'extraction du composant (2b) hors du dispositif, et la rainure étant configurée pour réceptionner la gorge circulaire et pour guider le composant de la zone d'entrée vers la zone de sortie, **caractérisé en ce qu'**il comprend :
- un système de maintien (32, 19) du composant dans une zone d'attente (21) sur la rainure, ledit système de maintien étant configuré pour être activé par la plaque, l'arrêt de la plaque dans une position définie permettant audit système de maintien de maintenir le composant dans la zone d'attente,
- un système de transfert (32, 22) configuré pour déplacer le composant de la zone d'attente vers la zone de sortie, le système de transfert étant activé par la plaque lors du redémarrage de ladite plaque,
- un système de gestion configuré pour au moins contrôler la présence d'un composant (2a) en zone d'attente et la présence d'un composant (2b) en zone de sortie, pour stopper la plaque dans la position définie lors de la détection d'une présence de composant en zone d'attente, et pour redémarrer la plaque lors d'une détection d'une absence de composant en zone de sortie.

2. Dispositif (1) selon la revendication 1, dans lequel la zone de sortie (16) est disposée à un niveau inférieur à la zone d'entrée (15), le rail de guidage (14) s'étendant vers le bas.

3. Dispositif (1) selon la revendication 2, dans lequel le système de maintien comprend :
- une lame (32) configurée pour être déplacée d'une position dégagée où le composant (2a) peut glisser dans la rainure (17), à une position de butée où le composant reste bloqué dans la rainure au niveau de la zone d'attente (21), et ;
- des moyens de déplacement de la lame configurés pour déplacer la lame en position de butée sous l'action de la plaque atteignant la position définie, et pour déplacer la lame en position dégagée sous l'action de la plaque quittant ladite position définie.

4. Dispositif (1) selon l'une des revendications 2 ou 3, dans lequel le système de transfert est mis en oeuvre par le système de maintien et le rail de guidage (14) s'étendant vers le bas, la désactivation dudit système de maintien libérant le composant (2a) en zone d'attente (21) et permettant la descente par gravité dudit composant jusque dans la zone de sortie (16).

5. Dispositif (1) selon l'une des revendications 3 à 4, dans lequel le système de gestion comprend un capteur (20) de présence d'un composant dans la zone d'attente (21), en butée sur la lame (32).

6. Dispositif (1) selon la revendication 1, dans lequel la zone de sortie (16) est disposée à un niveau supérieur à la zone d'entrée (15), le rail de guidage (14) s'étendant vers le haut.

7. Dispositif (1) selon la revendication 6, dans lequel le système de maintien comprend un bras (19) longitudinal muni d'une extrémité supérieure (19a) et configuré pour translater dans la rainure (17) concomitamment à la plaque (10), ladite extrémité supérieure (19a) étant configurée pour se loger dans un composant (2a) disposé dans la zone d'entrée (15) et pour déplacer ledit composant jusque la zone d'attente (21), lors de la montée de la plaque jusqu'à sa position haute.

8. Dispositif (1) selon la revendication 7, dans lequel le système de gestion comprend un capteur (20) de présence du composant (2a) disposé sur l'extrémité supérieure (19a) du bras (19) lorsque la plaque (10) atteint sa position haute.

9. Dispositif (1) selon l'une des revendications 6 à 8, dans lequel le système de transfert comprend :
- une pièce de transfert (22) comprenant au moins un doigt (24) rétractable monté en rappel par ressort, ledit doigt étant configuré pour laisser entrer le composant (2a) dans la zone d'attente (21) et venir en butée au-dessous dudit composant une fois la zone d'attente atteinte ;
- des moyens de déplacement (23, 27, 28a, 28b, 29) de la pièce de transfert (22) par rapport au rail de guidage (14) configurés pour déplacer l'au moins un doigt (24) rétractable le long de la rainure (17) en le maintenant en butée contre le composant (2a), de la zone d'attente (21) jusque la zone de sortie (16).

10. Dispositif (1) selon l'une des revendications 1 à 9, dans lequel le rail de guidage (14) comprend à son extrémité distale une portion recourbée (14a) dans laquelle est mise en oeuvre la zone de sortie (16).

11. Dispositif (1) selon l'une des revendications 1 à 10, dans lequel les moyens de translation en va-et-vient de la plaque (10) comprennent un vérin.

12. Dispositif (1) selon l'une des revendications 1 à 11, dans lequel le système de gestion comprend un capteur de présence agencé dans la zone de sortie.

13. Installation comprenant au moins un dispositif (1) de distribution de composants (2, 2a, 2b) selon l'une des revendications 1 à 12 et au moins un dispositif d'alimentation en composants raccordé à l'au moins un dispositif de distribution par au moins un conduit, ledit dispositif d'alimentation étant configuré pour stocker en vrac une quantité importante de composants (2) et pour acheminer successivement lesdits composants au travers de l'au moins un conduit jusque l'au moins un dispositif de distribution, sous la commande du système de gestion dudit dispositif de distribution.

14. Procédé de distribution de composants (2, 2a, 2b) de type agrafe munie d'une gorge circulaire (5) au moyen d'un dispositif (1) de distribution, comprenant :
- une étape d'activation en translation va-et-vient d'une plaque (10) disposée dans un magasin (8) de réception d'au moins un composant (2a), ladite plaque étant munie d'une arête supérieure inclinée (13) dans laquelle vient se loger la gorge circulaire du composant,
- une étape de transfert du composant logé sur l'arête supérieure inclinée de la plaque, vers une zone d'entrée (15) d'un rail de guidage (14), lorsque ladite plaque est en position haute,
caractérisé en en ce qu'il comprend les étapes :
- d'acheminement du composant (2a) de la zone d'entrée (15) jusqu'à une zone d'attente (21) sur le rail de guidage (14) ;
- d'activation d'un système de maintien (32, 19) du composant dans la zone d'attente, sous l'action de la plaque ;
- d'arrêt de la plaque dans une position définie lors de la détection du composant atteignant une zone d'attente (21) ;
- de démarrage de la plaque lorsque le composant précédent situé dans une zone de sortie (16) du rail de guidage est extrait du dispositif;
- d'activation d'un système de transfert (32, 22) du composant de la zone d'attente jusque dans la zone de sortie, ledit transfert étant occasionné par ledit démarrage de la plaque.
